(19) Europäisches Patentamt

European Patent Office

Office européen des brevets

(11) Veröffentlichungsnummer: **0 467 227 A2**

## (12) EUROPÄISCHE PATENTANMELDUNG

(21) Anmeldenummer: **91111606.9**

(22) Anmeldetag: **12.07.91**

(30) Priorität: **18.07.90 AT 1515/90**

(43) Veröffentlichungstag der Anmeldung:
**22.01.92 Patentblatt 92/04**

(84) Benannte Vertragsstaaten:
**BE CH DE DK ES FR GB GR IT LI NL SE**

(51) Int. Cl.⁵: **C08J 3/03**, B01F 17/42,
//C09D5/02

(71) Anmelder: **VIANOVA KUNSTHARZ
AKTIENGESELLSCHAFT
Postfach 191 Leechgasse 21
A-8011 Graz(AT)**

(72) Erfinder: **Urbano, Edmund, Dr.
Tannhofweg 12
A-8044 Graz(AT)**

(54) **Verfahren zur Herstellung von wässrigen Bindemittelemulsionen.**

㊼ Die Erfindung betrifft ein Verfahren zur Herstellung von wäßrigen Bindemittelemulsionen mit hohem Feststoffgehalt in einer gegebenenfalls auch lösemittel- und/oder neutralisationsmittelfreien Form, wobei man

(A) 1 bis 15 Gew.-% eines mit der Harzkomponente (B) verträglichen hochmolekularen Emulgators, der einen Gehalt von mindestens 70 Gew.-% an Polyethylenglykol aufweist, mit Wasser auf eine Viskosität von 1 bis 80 Pa.s, gemessen bei 20 °C, bei einem Feststoffgehalt von höchstens 35 Gew.-%, einstellt und unter Rühren diese Lösung mit

(B) 85 bis 99 Gew.-% eines Polykondensations- oder Polyadditions- oder Polymerisationsharzes, wobei die Komponente (B) vorzugsweise in 100 Gew.-%iger Form und gegebenenfalls bei einer Temperatur bis zu 160 °C vorliegt, mischt, mit der Maßgabe, daß man die Viskosität der beiden Komponenten vor der Mischung durch den Verdünnungsgrad und/oder die Temperatur der Komponente (A) und/oder die Temperatur der Komponente (B) jeweils auf einen Bereich zwischen 1 und 40 Pa.s, gemessen bei der Mischtemperatur, einstellt und die Mischung mit Wasser verdünnt.

EP 0 467 227 A2

Die Erfindung betrifft ein Verfahren zur Herstellung von wäßrigen Bindemittelemulsionen mit hohem Feststoffgehalt in einer gegebenenfalls auch lösemittel- und/oder neutralisationsmittelfreien Form.

Die in den letzten Jahren als wasserverdünnbare Bindemittel für Lacke entwickelten und für höherwertige Anstrichmittel verwendeten wäßrigen Kunstharzemulsionen enthalten aus Gründen der Herstellung, der Stabilisierung oder ihrer weiteren Verarbeitung mehr oder weniger große Anteile an organischen Lösemitteln und an flüchtigen Neutralisationsmitteln, wie Amine oder Ammoniak.

Diese Anteile können zwar, wie in der US-PS 3,269,967 oder der US-PS 3,440,193 bei Verwendung von Emulgatoren, wie Alkylphenolethoxylaten und Fettalkoholethoxylaten, vermindert werden, doch werden durch diese niedermolekularen Stoffe, die im gehärteten Film unverändert vorliegen, Eigenschaften der Filme, wie Trocknung, Härte und Wasser- bzw. Wetterfestigkeit, negativ beeinflußt.

In den AT-PSen 325 742, 333 035 oder 336 277 werden mit Polyethylenglykol modifizierte Emulgatorharze zur Emulgierung des Hauptbindemittels eingesetzt, wodurch die genannten Nachteile weitgehend vermieden werden sollen. Zur Erzielung von stabilen Emulsionen benötigen diese Bindemittel aber eine hohe Menge von Neutralisationsmitteln und organischen Hilfslösemitteln. Durch den notwendigen hohen Anteil an Emulgatorharz zeigen die aus solchen Bindemittelemulsionen erhaltenen Filme ebenfalls Mängel in der Wasser- und Wetterfestigkeit.

Überraschenderweise wurde nun gefunden, daß man feststoffreiche und emissionsarme, wäßrige Emulsionen von verschiedensten Kunstharztypen erhält, wenn die Herstellung der Emulsionen unter Verwendung spezifischer hochmolekularer Emulgatoren und bei bestimmten Verfahrensbedingungen erfolgt.

Die vorliegende Erfindung betrifft demgemäß ein Verfahren zur Herstellung von wäßrigen Bindemittelemulsionen mit hohem Feststoffgehalt in einer gegebenenfalls auch lösemittel- und/oder neutralisationsmittelfreien Form, welches dadurch gekennzeichnet ist, daß man

(A) 1 bis 15 Gew.-%, vorzugsweise 3 bis 10 Gew.-%, eines mit der Harzkomponente (B) verträglichen, hochmolekularen Emulgators auf Basis eines Polykondensations- oder Polyadditions- oder Polymerisationsproduktes, der einen Gehalt von mindestens 70 Gew.-% an Polyethylenglykol, einen HLB-Wert von 13 bis 19, und eine mittlere Molmasse (Gewichtsmittel) von 8 000 - 100 000, vorzugsweise 10 000 bis 50 000, aufweist, mit Wasser auf eine Viskosität von 1 bis 80 Pa.s, vorzugsweise von 5 - 50 Pa.s, gemessen bei 20 $^\circ$C, bei einem Feststoffgehalt von höchstens 35 Gew.-%, vorzugsweise 10 bis 25 Gew.-%, einstellt und unter Rühren diese Lösung mit

(B) 85 bis 99 Gew.-%, vorzugsweise 90 bis 97 Gew.-%, eines Polykondensations- oder Polyadditions- oder Polymerisationsharzes oder eines Gemisches solcher Harze, wobei die Komponente (B) vorzugsweise in 100 Gew.-%iger Form und gegebenenfalls bei einer Temperatur bis zu 160 $^\circ$C vorliegt, mischt, mit der Maßgabe, daß man die Viskosität der beiden Komponenten vor der Mischung durch den Verdünnungsgrad und/oder die Temperatur der Komponente (A) und/oder die Temperatur der Komponente (B) jeweils auf einen Bereich zwischen 1 und 40 Pa.s, gemessen bei der Mischtemperatur, einstellt und die Mischung, gegebenenfalls nach teilweiser oder vollständiger Neutralisaton von Carboxylgruppen der Komponente (B), mit Wasser verdünnt.

Die Erfindung betrifft weiters die nach dem beanspruchten Verfahren hergestellten Emulsionen sowie deren Verwendung als Bindemittel in Beschichtungsmitteln, insbesonders in Lacken und Anstrichmitteln.

Es war überraschend und nicht vorhersehbar, daß durch die weitgehende Angleichung der Viskositäten der beiden hochviskosen Komponenten bereits bei einer Durchmischung mit den in üblichen Reaktoren für Kunstharze verwendeten Rührwerken durch die innere Scherung hochstabile Emulsionen auch bei Teilchengrößen im Bereich bis zu 10 $\mu$m erhalten werden.

Durch diese Vorgangsweise, bei der eine mizellare Emulgatorlösung vorgebildet wird, entfällt überdies die bei herkömmlichen Verfahren auftretende Inversion der anfangs gebildeten Wasser-in-Öl-Emulsion (W/O) in die gewünschte Öl-in-Wasser-Emulsion (O/W). Während der Mischung der Komponenten bildet sich sofort die Öl-in-Wasser-Emulsion, wodurch bereits nach kurzer Homogenisierung die erhaltene Emulsion auf den gewünschten Festkörpergehalt verdünnt werden kann. Somit lassen sich auch die in herkömmlichen Verfahren, bei welchen der Emulgator bzw. das Emulgatorharz mit dem zu emulgierenden Harz vorgemischt werden, zu Beginn der Wasserzugabe festzustellenden sehr starken Viskositätserhöhungen vermeiden welche eine Homogenisierung verhindern oder zumindest erschweren können.

Als Emulgatoren (Komponente A) können sowohl Polykondensations-, wie auch Polyadditions- oder Polymerisationsprodukte zum Einsatz kommen, soferne sie mit dem zu emulgierenden Harz (Komponente B) verträglich sind, d.h. im angegebenen Mischungsverhältnis nach der Trocknung einen klaren und von Oberflächenstörungen freien Film ergeben.

Diese Emulgatoren sind durch einen Gehalt von mindestens 70 Gew.-% an Polyethylenglykoleinheiten sowie einen HLB-Wert (Hydrophilie-Lipophilie Balance, siehe "Neuere Untersuchungen über den HLB-Wert nichtionogener Tenside und seine Bestimmung", G. Dahms und K. G. Ludwig, Parfümerie und Kosmetik 64 (1983), 311 - 316), von 13 - 19 charakterisiert. Das Gewichtsmittel ihrer Molmasse beträgt 8 000 - 100 000, vorzugsweise 10 000 - 50 000. Gegebenenfalls können sie auch Carboxylgruppen entsprechend einer Säurezahl von max. 30 mg KOH/g bzw. Aminogruppen entsprechend einer Aminzahl von max. 30 mg KOH/g aufweisen.

Durch eine zusätzliche anteilige Verwendung von Propylenoxid kann die Hydrophilie-Lipophilie-Balance (HLB-Wert) gesteuert werden. Auch reine Ethylenoxid-Propylenoxid-Blockcopolymere mit einem Polyethylenglykolanteil von mindestens 70 Gew.-% können als Emulgator verwendet werden.

Die Emulgatorharze kommen beim erfindungsgemäßen Verfahren in Form ihrer wäßrigen Lösung mit einem Feststoffgehalt von höchstens 35 Gew.-% zum Einsatz. Lösungen dieser Art haben eine Viskosität von 1 bis 80 Pa.s gemessen bei 20°C. Vorzugsweise werden Lösungen mit einem Feststoffgehalt von 10 bis 25 Gew.-%, die eine Viskosität von 5 bis 50 Pa.s (20°C) aufweisen, eingesetzt. Im Vergleich dazu haben entsprechende Lösungen niedermolekularer Emulgatoren eine Viskosität von 0,01 bis 0,5 Pa.s. Der pH-Wert der Lösungen kann 2,0 - 8,0 betragen.

Mit Hilfe des beschriebenen Verfahrens können bei geeigneter Auswahl des Emulgators unterschiedlichste als Bindemittel für Beschichtungsmaterialien dienende Kunstharze (Komponente (B)) in stabile und für die weitere Verarbeitung bzw. Anwendung geeignete wäßrige Emulsionen übergeführt werden. Zu den bevorzugten Produkten zählen Polykondensationsharze, wie kurz-, mittel- oder langölige Alkydharze, die gegebenenfalls in bekannter Weise, z.B. durch den Einbau von Urethan-, Vinyl-, und Acrylatgruppen modifiziert sein können. Weiters zählen dazu ölfreie oder ungesättigte Polyesterharze. Ebenso lassen sich auch Polyadditions- oder Polymerisationsharze, wie Epoxidharze, Epoxidharzester, Polybutadienöle und Vinyl- bzw. Acrylat-Copolymere in die Form einer wäßrigen Emulsion überführen. Selbstverständlich können auch Gemische dieser Harze zum Einsatz kommen, soferne deren Verträglichkeit gegeben ist.

Der Aufbau und die Herstellung dieser Harze sind dem Fachmann bekannt und in der einschlägigen Fachliteratur beschrieben. Die Harze werden vorteilhafterweise in ihrer 100%igen Form eingesetzt. Gegebenenfalls können z.B. aus produktionstechnischen Gründen bis zu 10 Gew.-% organische Lösemittel enthalten.

Bei der Herstellung der Emulsionen nach dem erfindungsgemäßen Verfahren wird vorzugsweise die wäßrige Lösung des Emulgators vorgelegt und das zu emulgierende Harz (Komponente (B)) unter Rühren zugegeben, wobei die Viskositäten der beiden Komponenten durch den Verdünnungsgrad und/oder die Temperatur der Komponente (A) und/oder durch eine Temperaturerhöhung der Komponente (B) auf einen Bereich gleicher Größenordnung angeglichen werden, um eine bessere Mischbarkeit und damit schnellere Homogenisierung zu erreichen. So können beim erfindungsgemäßen Verfahren aufgeschmolzene Festharze mit einer Temperatur bis 160°C zur kalten, wäßrigen Emulgatorharzlösung zugegeben werden, sodaß eine Mischtemperatur ($T_m$) von ca. 60 - max. 100°C erreicht wird. Auch die Zugabe der warmen Emulgatorlösung zum aufgeschmolzenen Festharz ist möglich, soferne dadurch eine Mischtemperatur von 100°C nicht überschritten wird.

Die Komponenten werden in einem Verhältnis von 1 bis 15 Gew.-% der Komponente (A) und 85 bis 99 Gew.-% der Komponente (B), bezogen auf Feststoff, eingesetzt. Vorzugsweise liegt dieses Verhältnis im Bereich von 3 bis 10 Gew.-% Komponente (A) zu 90 bis 97 Gew.-% Komponente (B). Nach gründlicher Homogenisierung und gegebenenfalls teilweiser oder vollständiger Neutralisation von Carboxylgruppen der Komponente (B) kann die so erhaltene Emulsion auf den gewünschten Feststoffgehalt verdünnt werden, wobei die nach dem erfindungsgemäßen Verfahren hergestellten wäßrigen Emulsionen bei Zugabe weiterer Mengen von Wasser einen gleichmäßigen Viskositätsabfall ohne einen bei herkömmlichen Verfahren auftretenden Viskositätsanstieg zeigen.

Die nach dem erfindungsgemäßen Verfahren hergestellten Emulsionen können je nach Art des emulgierten Kunstharzes als Bindemittel für Lacke, sowie für Beschichtungsmittel von Textilien oder mineralischen Materialien u.ä. eingesetzt werden. Auf dem Anstrichsektor lassen sich auf Basis der erfindungsgemäßen Emulsionen Klarlacke, Lasuren, Grundierungen und Decklacke formulieren.

Für die Beschichtung von Werkstücken aus Eisen oder Stahl werden die Emulsionen vorzugsweise mit einem pH-Wert von über 7 eingesetzt, um die bei der Verwendung von sauren wäßrigen Lacksystemen auftretende Flugrostbildung zu vermeiden. Die Einstellung des pH-Wertes mit Alkali- oder Erdalkalihydroxiden kann in jeder Phase des Verfahrens erfolgen, auf die Stabilität der Emulsion hat sie keinen Einfluß.

Die folgenden Beispiele erläutern die Erfindung. Alle Angaben in Teilen und Prozenten beziehen sich, soferne nicht anderes angegeben ist, auf Gewichtseinheiten. Die Messungen der Viskosität wurden entweder mit einem BROOKFIELD Rotationsviskometer Typ RVT bei 20°C (Angaben in Pa.s) oder als Auslaufzeit (in Sekunden) mit dem DIN-Becher nach DIN 53211 bei 20°C durchgeführt. In den Beispielen wurden folgende Produkte eingesetzt:

Komponente (A)

Komponente (A1): handelsüblicher, nichtionischer Emulgator auf Basis eines Sorbitan-Fettsäure-Phthalsäureesters, ca. 85 Gew.-% Polyethylenglykol enthaltend.
HLB-Wert: ca. 15
mittlere Molmasse: ca. 15 000
Feststoffgehalt (Lieferform): 100 %
Viskosität, 20%ig in Wasser: 30 - 50 Pa.s
Säurezahl: unter 20 mg KOH/g
Hydroxylzahl: unter 20 mg KOH/g
Komponente (A2): handelsüblicher, nichtionischer Emulgator auf Basis eines p-Hydroxystyrolpolymeren, ca. 80 Gew.-% Polyethylenglykol enthaltend.
HLB-Wert: ca. 16
mittlere Molmasse: ca. 30 000
Feststoffgehalt (Lieferform): 100 %
Viskosität, 25%ig in Wasser: 5 - 15 Pa.s
Hydroxylzahl: unter 20 mg KOH/g
Komponente (A3): Ethylenoxid-Propylenoxid-Blockcopolymer, ca. 85 Gew.-% Ethylenoxid enthaltend.
HLB-Wert: ca. 17
mittlere Molmasse: ca. 45 000
Feststoffgehalt (Lieferform): 100 %
Viskosität, 20%ig in Wasser: 10 - 25 Pa.s
Hydroxylzahl: unter 20 mg KOH/g

Komponente (B)

In allen Beispielen werden handelsübliche Kunstharze, wie sie in der Lackindustrie als Bindemittel für verschiedene Einsatzzwecke gebräuchlich sind, verwendet. Die von den Lieferanten angegebenen charakteristischen Kennzahlen sind in der Tabelle 1 zusammengefaßt.

Beispiele 1 - 10:

Die erfindungsgemäße Herstellung der Emulsionen erfolgte in den in Tabelle 2 angegebenen Mengenverhältnissen und Bedingungen. In einem üblichen Kunstharzreaktor mit Ankerrührwerk wurde die Komponente (A) vorgelegt und die vorgewärmte Komponente (B) innerhalb von 30 Minuten unter Rühren zugegeben. Bei den Beispielen 4 und 7 wurde die Komponente (A) zur nicht vorgewärmten Komponente (B) gegeben und anschließend gemischt.

## Tabelle 1

| Komponente | Charakteristik | Feststoffgehalt (für erfg. Einsatz) | Hydroxylzahl mg KOH/g | Säurezahl mg KOH/g | Viskosität (Meßlösung) |
|---|---|---|---|---|---|
| (B1) | trocknendes Alkydharz 67 % Sojaöl | 100 % | ca. 60 | unter 10 | 70 - 140 s (50 % in Testbenzin) 1)3) |
| (B2) | nicht trocknendes Alkydharz 37 % synth. Fettsäuren | 100 % | ca. 100 | 8 - 15 | 70 - 140 s (60 % in Xylol) 1) |
| (B3) | phenolharzmod. Alkydharz 76 % Sojaöl | 100 % | ca. 20 | 3 - 8 | 160 - 240 s (70 % in Testbenzin) 1)3) |
| (B4) | ölfreies Polyesterharz | 100 % | ca. 100 | 5 - 15 | 50 - 90 s (50 % in Ethyl-glykolacetat) 1) |
| (B5) | Epoxidharz auf Basis Bisphenol A, EEW ca. 190 | 100 % | - | - | 9 - 12 Pa.s (100 %) 2) |
| (B6) | Polybutadienöl mittlere Molmasse ca. 1300 | 100 % | - | - | 1 - 2 Pa.s (100 %) 2) |
| (B7) | Urethanacrylatharz für strahlenhärtende Systeme | 100 % | unter 20 | unter 20 | 6 - 10 Pa.s (100 %) 2) |
| (B8) | ungesättigtes Polyesterharz für strahlenhärtende Systeme | 100 % | ca. 270 | unter 20 | 20 - 50 Pa.s (100 %) 2) |
| (B9) | Acrylatcopolymerisat für Decklacksysteme | 100 % | ca. 90 | 10 - 20 | 40 - 90 s (50 % in Xylol und Butylacetat, 1:1) 1) |

1) DIN 53211/20°C
2) Brookfield Rotationsviskosimeter Typ RVT / 20°C
3) Aromatengehalt: 18 Vol.-%, Siedebereich 140 - 180°C

Nach einstündiger Homogenisierung wurde durch portionsweise Zugabe von Wasser auf den gewünschten Feststoffgehalt verdünnt.

Eine allfällige pH-Wert-Einstellung erfolgte mit 5%iger Lithiumhydroxidlösung in der in Tabelle 2 angegebenen Weise.

Tabelle 2 enthält auch Angaben über die Anwendung der Emulsionen und die bevorzugten Härtungsmöglichkeiten. Diese sind dem Fachmann geläufig und richten sich nach den Empfehlungen der Harzhersteller.

So wurden oxidativ trocknende Systeme mit Kobalt-Zirkon-Kombinationstrocknern (0,09 % Co- und 0,15 % Zr-Metallgehalt auf Festharz) und Butanonoxim als Antihautmittel versetzt und die Trocknung und Filmbeschaffenheit im Vergleich zur lösemittelhaltigen Lieferform des Harzes beurteilt. Harz-Härter-Systeme wurden bei Raumtemperatur (Beispiel 4) oder bei 160°C (Beispiele 6, 9; HMMM = Hexamethoxymethylmelamin) gehärtet. Die UV-Härtung (Beispiele 5, 8) erfolgte auf Glas mit zwei 80 Watt UV-Röhren und einer Bandgeschwindigkeit von 10 Metern/Minute.

Alle Emulsionen ergaben Filme, welche den lösemittelhaltigen Systemen in Trocknungseigenschaften und Filmbeschaffenheit entsprachen. Die Stabilität der Emulsionen wurde durch Lagerung bei 40°C und 80°C sowie 5 Gefrier-Tau-Zyklen bestimmt. Alle Emulsionen waren nach 240 Stunden (80°C) bzw. nach 600 Stunden (40°C) noch in Ordnung. Nach 5 Gefrier-Tau-Zyklen zeigten sich keine signifikanten Verände-rungen der Emulsionen.

## Tabelle 2

| Bei-spiel | Komponente (A) | | | | Komponente (B) | | | | Dispersion | | | | | |
|---|---|---|---|---|---|---|---|---|---|---|---|---|---|---|
| | Art | Menge (Tle Fest-stoff) | Fest-stoff-gehalt (Gew.-%) | Visk.(A) bei 20°C /bei $T_m$ (Pa.s) gerundet | Art | Menge (Tle Fest-stoff) | Zugabe-temp. $T_z$ in °C | Visk.(B) bei $T_z$ (Pa.s) gerundet | Misch-temp. in °C | weiter ver-dünnt mit $H_2O$ auf Gew.-% FK | pH-Wert-Einstellung Art(1) | pH | Visk. in Pa.s | Anwendung/Härtung |
| 1 | A1 | 6 | 20 | 40 / 7 | B1 | 94 | 80 | 5 | 62 | 55 | (c) | 7,5 | 5,0 | Malerlacke/oxidativ |
| 2 | A1 | 8 | 20 | 40 / 6 | B2 | 92 | 90 | 3 | 68 | 50 | - | 2,8 | 3,2 | Holzlacke/Nitro-cellulose |
| 3 | A1 | 4 | 20 | 40 / 10 | B3 | 96 | 70 | 1 | 55 | 60 | (b) | 7,2 | 5,5 | Holzlasuren/oxidativ |
| 4 | A1 | 10 | 15 | 5 / 5 | B5 | 90 | 30 | 9 | 25 | 60 | (a) | 6,8 | 5,0 | Grundierung/Polyamin |
| 5 | A1 | 10 | 20 | 40 / 20 | B7 | 90 | 40 | 5 | 35 | 50 | - | 3,8 | 2,3 | Decklack/UV |
| 6 | A2 | 10 | 25 | 15 / 1 | B4 | 90 | 120 | 10 | 88 | 50 | - | 3,4 | 4,1 | Industrielacke/HMM |
| 7 | A2 | 10 | 20 | 7 / 7 | B6 | 90 | 20 | 2 | 20 | 60 | (c) | 4,5 | 2,5 | Grundierung/oxidativ |
| 8 | A3 | 6 | 20 | 15 / 8 | B8 | 94 | 50 | 3 | 42 | 50 | - | 4,5 | 3,2 | Decklack/UV |
| 9 | A3 | 10 | 25 | 22 / 3 | B9 | 90 | 95 | 12 | 75 | 50 | - | 3,2 | 6 | Decklack/HMM |
| 10 | A3 | 6 | 25 | 22 / 5 | B1 | 94 | 80 | 2 | 65 | 50 | (c) | 8,2 | 1,5 | Klarlack/oxidativ |

(1) Die Einstellung des pH-Wertes der wäßrigen Emulsion erfolgt mit 5%iger Lithiumhydroxidlösung:

(a) vor dem weiteren Verdünnen mit Wasser

(b) beim weiteren Verdünnen mit Wasser

(c) bei der Verarbeitung zum Lack

Vergleichsbeispiele 1a - 10a

In einem üblichen Kunstharzreaktor mit Ankerrührwerk wurde die Komponente (B) bis zur Rührfähigkeit vorgewärmt und die Emulgatorkomponente (A) in 100%iger Form ohne vorhergehende Anlösung im entsprechenden Verhältnis zugemischt. Die Art und Menge der Komponente (A) richtet sich nach den Angaben in den Beispielen 1 - 10 (Tabelle 2). Nach einstündigem Mischen wurde mit der Wasserzugabe

EP 0 467 227 A2

begonnen. Bei allen Vergleichsbeispielen wurde bei anfänglich schlechter Wasseraufnahme ein ausgeprägtes Viskositätsmaximum bei einem Feststoffgehalt von 65 - 80 Gew.-% beobachtet. Bei den Vergleichsbeispielen 1a, 3a, 6a, 9a und 10a konnte dadurch keine gute Durchmischung erreicht werden. Bei weiterer Wasserzugabe erfolgte die Flockulation der Emulsion und eine sofortige Phasentrennung wurde festgestellt.

Bei den Vergleichsbeispielen 2a, 5a und 8a wurden trotz guter Mischbarkeit keine Emulsionen mit reproduzierbaren, den Beispielen 2, 5 und 8 entsprechenden, Eigenschaften erhalten. Die Viskositäten der erhaltenen Emulsionen zeigten starke Schwankungen in der Reproduzierbarkeit bei generell niedrigeren Viskositätswerten als in Tabelle 2 angegeben. Nach 240 Stunden Lagerung bei 40 °C wurde eine Phasentrennung von ca. 1 cm festgestellt.

Die Vergleichsbeispiele 4a und 7a ergaben Emulsionen mit verminderte Stabilität bei erhöhter Temperatur, so wurde bei 40 °C nach 72 Stunden, bei 80 °C nach 12 Stunden eine Phasentrennung von 1 cm beobachtet. Nach einmaligem Einfrieren bei -5 °C waren die Emulsionen 2a, 5a und 8a koalesziert, während die Emulsionen 4a und 7a zwei Gefrier-Tau-Zyklen noch unverändert blieben.

Vergleichsbeispiele 1b - 9b

Analog den Beispielen 1a - 9a wurde die Emulgierung der Komponente B mit einer 100%igen Form einer Mischung aus einem handelsüblichen Nonylphenolethoxylat mit 30 Ethylenoxidheinheiten und einem handelsüblichen Nonylphenolethoxylat mit 6 Ethylenoxideinheiten im Verhältnis 6 : 1 durchgeführt. Auf diese Weise ließen sich nur die Harze B1 - B4 in eine Emulsionsform überführen. Der Lagertest bei 40 °C wurde nach 48 Stunden (Beispiel 4b) und nach 76 Stunden (Beispiele 1b, 2b und 3b) wegen Phasentrennung abgebrochen. Nach einmaligem Einfrieren bei -5 °C waren alle vier Emulsionen koalesziert.

Vergleichsbeispiele 1c - 9c

Analog den Beispielen 1 - 9 wurde die Emulgierung der Komponente B mit einer 25%igen wäßrigen Lösung der Emulgatormischung der Beispiele 1b - 9b (Viskosität: 0,075 Pa.s) durchgeführt. Im Vergleich zu den Beispielen 1b - 9b wurde kein Unterschied in der Emulgierbarkeit bzw. in den Eigenschaften der erhaltenen Emulsionen 1c - 4c gefunden.

Eine Steigerung der Konzentration der wäßrigen Emulgatorlösung auf 30 % ergab ein nicht zu handhabendes, stark strukturviskoses Gel, das für eine Emulgierung mit herkömmlichen Rühraggregaten nicht geeignet war.

**Patentansprüche**

1. Verfahren zur Herstellung von wäßrigen Bindemittelemulsionen, mit hohem Feststoffgehalt in einer gegebenenfalls auch lösemittel- und/oder neutralisationsmittelfreien Form, dadurch gekennzeichnet, daß man
   (A) 1 bis 15 Gew.-%, vorzugsweise 3 bis 10 Gew.-%, eines mit der Harzkomponente (B) verträglichen hochmolekularen Emulgators auf Basis eines Polykondensations- oder Polyadditions- oder Polymerisationsproduktes, der einen Gehalt von mindestens 70 Gew.-% an Polyethylenglykol, einen HLB-Wert von 13 bis 19, und eine mittlere Molmasse (Gewichtsmittel) von 8 000 - 100 000, vorzugsweise 10 000 bis 50 000, aufweist, mit Wasser auf eine Viskosität von 1 bis 80 Pa.s, vorzugsweise von 5 - 50 Pa.s, gemessen bei 20 °C, bei einem Feststoffgehalt von höchstens 35 Gew.-%, vorzugsweise 10 bis 25 Gew.-%, einstellt und unter Rühren diese Lösung mit
   (B) 85 bis 99 Gew.-%, vorzugsweise 90 bis 97 Gew.-%, eines Polykondensations- oder Polyadditions- oder Polymerisationsharzes oder eines Gemisches solcher Harze, wobei die Komponente (B) vorzugsweise in 100 Gew.-%iger Form und gegebenenfalls bei einer Temperatur bis zu 160 °C vorliegt, mischt, mit der Maßgabe, daß man die Viskosität der beiden Komponenten vor der Mischung durch den Verdünnungsgrad und/oder die Temperatur der Komponente (A) und/oder die Temperatur der Komponente (B) jeweils auf einen Bereich zwischen 1 und 40 Pa.s, gemessen bei der Mischtemperatur, einstellt und die Mischung, gegebenenfalls nach teilweiser oder vollständiger Neutralisation der Carboxylgruppen der Komponente (B), mit Wasser verdünnt.

2. Verfahren nach Anspruch 1, dadurch gekennzeichnet, daß man die erwärmte Komponente (B) in die vorgelegte Lösung der Komponente (A) einmischt, wobei die Viskositäten der beiden Komponenten bei der Mischungstemperatur einander möglichst angeglichen sind und die Mischungstemperatur 100 °C nicht überschreitet.

8

3.  Verfahren nach Anspruch 1, dadurch gekennzeichnet, daß man die Lösung der Komponente (A) in die vorgelegte, gegebenenfalls erwärmte Komponente (B) einmischt, wobei die Viskositäten der beiden Komponenten bei der Mischungstemperatur einander möglichst angeglichen sind und die Mischungstemperatur 100 ˚ C nicht überschreitet.

4.  Wäßrige Bindemittelemulsionen, hergestellt nach den Ansprüchen 1 - 3.

5.  Verwendung der nach den Ansprüchen 1 - 3 hergestellten wäßrigen Bindemittelemulsionen als Bindemittel in Beschichtungsmitteln, insbesonders in Lacken und Anstrichmitteln.